Europäisches Patentamt

European Patent Office

Office européen des brevets

(19)

(11) Veröffentlichungsnummer: **0 256 152 B1**

(12) **EUROPÄISCHE PATENTSCHRIFT**

(45) Veröffentlichungstag der Patentschrift: **31.07.91**

(51) Int. Cl.5: **H04N 7/087, H04H 1/00**

(21) Anmeldenummer: **86111233.2**

(22) Anmeldetag: **14.08.86**

(54) **Verfahren zur Bildung eines Schaltsignals in einem Rundfunk- oder Videoempfangsgerät.**

(43) Veröffentlichungstag der Anmeldung:
**24.02.88 Patentblatt 88/08**

(45) Bekanntmachung des Hinweises auf die
Patenterteilung:
**31.07.91 Patentblatt 91/31**

(84) Benannte Vertragsstaaten:
**AT BE DE FR GB IT NL SE**

(56) Entgegenhaltungen:
**EP-A- 0 096 381**
**EP-A- 0 118 104**
**EP-A- 0 133 985**

(73) Patentinhaber: **Nokia Unterhaltungselektronik
(Deutschland) GmbH
Östliche Karl-Friedrich-Strasse 132
W-7530 Pforzheim(DE)**

(72) Erfinder: **Apitz, Siegfried
L. Windthorststrasse 24
W-7530 Pforzheim(DE)**

## Beschreibung

Die Erfindung betrifft ein Verfahren zur Bildung eines Schaltsignales in einem Rundfunk- oder Videoempfangsgerät und ein Empfangsgerät zur Durchführung des Verfahrens.

Zur Zeit versehen Rundfunk- und Fernsehsender ihre Sendungen mit einer Reihe von Kennungsdatenworten, die in einem Rundfunk- oder Videoempfangsgerät beispielsweise den empfangenen Sender, das von dem Sender ausgestrahlte Senderprogramm und die gerade ausgestrahlte und vom Empfangsgerät empfangene Sendung kennzeichnen. Insbesondere anhand des Sendungskennnungsdatenwortes, das einer bestimmten Sendung fest zugeordnet ist und während der Sendung übertragen wird, kann ein Empfangsgerät, das auf den zugehörigen Sender abgestimmt ist, diese Sendung erkennen, mit im Programmwunschspeicher des Empfangsgerätes gespeicherten Programmwünschen vergleichen und aus dem Vergleich dementsprechend vorprogrammierte Schaltbefehle ausführen.

Aus der DE-A- 26 14 188 ist ein Rundfunkübertragungssystem bekannt, in dem während der Übertragung der Sendung eines Senders zusätzlich eine Sendungskennung mit einem Kennungsdatenwort übertragen wird, das die übertragene Sendung besonders kennzeichnet und das in einem Empfangsgerät ausgewertet wird. Der Auswerter im Empfangsgerät vergleicht das übertragene Sendungskennungsdatenwort mit einem in einem Programmwunschspeicher des Empfangsgerätes gespeicherten, die übertragene Sendung als vom Benutzer ausgewählte Sendung kennzeichnenden Kennungsdatenwort und bildet bei einer Koinzidenz ein Schaltsignal, das das Empfangsgerät für die Aufnahme der übertragenen Sendung so lange wirksam schaltet, solange das Kennungsdatenwort für die Sendung empfangen wird.

Es ist jedoch nicht immer gewährleistet, daß die übertragenen Sendungskennungsdatenworte ausreichend für den Vergleich lesbar von der Datenabtrennstufe ausgegeben werden, selbst dann, wenn das Rahmenwort richtig erkannt worden ist. So besteht die Gefahr, daß Teile einer Sendung des empfangenen Senders nicht erkannt werden und für eine Wiedergabe durch das Empfangsgerät, oder - was noch schlimmer ist - für eine Aufnahme mit einem Videorecorderempfangsgerät verlorengehen.

Es wird deshalb in der EP-Druckschrift EP-A-0 133 985 vorgeschlagen, in das oben angegebene Verfahren einen Fehlerschutz einzuführen, dadurch, daß das angegebene Verfahren erst auf ein eine bestimmte Anzahl mehrfach nacheinander identisch empfangenes Sendungskennungsdatenwort reagiert. Dazu werden gemäß einer anderen EP-Druckschrift EP-A-0 118 104 bei jedem Empfang eines Sendungskennungsdatenwortes die Ausgangsdaten einer Datenabtrennschaltung mit den Ausgangsdaten eines Programmwunsches des Programmwunschspeichers eines Wiedergabegerätes verglichen und nur dann ein Datenkoinzidenzsignal erzeugt, wenn die Datenvergleichsanordnung des Wiedergabegerätes innerhalb einer bestimmten, in einem Zähler gezählten Anzahl von Wiederholtakten eine bestimmte Anzahl Koinzidenzen festgestellt hat.

Ein derartiger Vergleich von Ausgangsdaten des Sendungskennungsdatenwortes mit den Ausgangsdaten der Programmwünsche des Programmwunschspeichers führt jedoch dann zu keinem Ergebnis, wenn zwar zur übertragenen Sendung gehörende, aber den Sendungszustand kennzeichnende Sendungskennungsdatenworte übertragen werden, z.B. die Kennzeichnung einer Unterbrechung der gerade empfangenen Sendung, die nicht in den Daten der in den Programmwunschspeicher gespeicherten Programmwünsche enthalten sind. Dadurch können in dem Empfangs-/Wiedergabegerät keine von derartigen Sendungskennungsdatenworten abhängige Schalt- und Anzeigefunktionen ausgelöst werden.

Der Erfindung liegt deshalb die Aufgabe zugrunde, ein Verfahren anzugeben, das ein von den Empfangsstörungen am Ort des Empfangsgerätes weitgehend unabhängiges Schaltsignal zur Auslösung einer vom Sendungskennungsdatenwort der empfangenen Sendung abhängigen Schalt- und Anzeigefunktion im Empfangsgerät bildet.

Diese Aufgabe wird nach der Erfindung für ein im Oberbegriff des Anspruches 1 angegebenes Verfahren mittels der im kennzeichnenden Teil dieses Anspruches 1 angegebenen Verfahrensmerkmale in vorteilhafter Weise gelöst.

Mit dem Verfahren gemäß der Erfindung werden Sendungskennungsdatenworte nur dann zu einer Auswertung weitergegeben, wenn sie nach mehrfacher Wiederholung mit hoher Sicherheit als erkennbar festgestellt wurden. Die Prüfzeit für die Erkennung mit hoher Sicherheit benötigt eine nur kurze Prüfzeit, die für den Anwender des Gerätes nicht spürbar ist, selbst bei schlechten Empfangsverhältnissen. Außerdem erfordert das erfindungsgemäße Verfahren einen nur geringen zusätzlichen Schaltungsaufwand in dem Empfangsgerät, in dem es angewendet wird.

Der Anspruch 2 kennzeichnet eine besonders vorteilhafte Ausgestaltung des Verfahrens, in der der Prüfzyklus in zwei Prüfabschnitte aufgeteilt wird. Das Vergleichsdatenwort, das im ersten Prüfabschnitt gewonnen wird, wird in beiden Prüfabschnitten als mit sehr hoher Sicherheit erkennbar ausgewiesen und eignet sich deshalb besonders hervorragend zur Ausgabe an die nachfolgende Datenauswertschaltung.

Mit dem Merkmale des Anspruches 3 wird eine weitere Verbesserung der Erfindung erreicht. Bei einer länger anhaltenden Störung des Empfanges der Sendungskennung wertet das Empfangsgerät das dadurch verursachte Ausbleiben eines Koinzidenzsignales über eine bestimmte Zeit hinaus als Ende der Übertragung der Sendungskennung für die empfangene Sendung. Ein Schaltsignal wird mit den Maßnahmen des Anspruches 3 erst dann gebildet und freigegeben, wenn bei einem Wechsel zweier aufeinanderfolgender und gekennzeichneter Sendungen sicher erkannt wird, daß die zweite Sendung begonnen worden ist. So wird beispielsweise die Gefahr vermieden, daß bei einem vorübergehenden Ausfall des Senders oder der Kennung der ersten Sendung die Aufnahme dieser Sendung abgeschaltet wird, obwohl diese Sendung noch nicht beendet ist. Dies würde zu einem Verlust des restlichen Teiles der ersten Sendung führen.

Die Merkmale des kennzeichnenden Teiles des Anspruches 4 stellen eine vorteilhafte Ausbildung eines Rundfunk- oder Videoempfangsgerätes dar, durch die die in dem Empfangsgerät abgetrennten Kennungsdatenworte nach dem Verfahren der Erfindung geprüft und somit erst bei hoher Sicherheit ihrer Erkennbarkeit an die Datenauswertschaltung des Gerätes weitergegeben werden. Die erfindungsgemäßen Merkmale eines in Anspruch 4 angegebenen Empfangsgerätes können mit den Schaltungsteilen eines Mikroprozessors verwirklicht werden, so daß, wenn in dem Empfangsgerät bereits ein Mikroprozessor verwendet wird, kein oder nur ein geringer zusätzlicher Schaltungsaufwand erforderlich ist.

Mit den Merkmalen des Anspruches 5 wird eine vorteilhafte Ausgestaltung eines Rundfunk- oder Videoempfangsgerätes angegeben, das mit großer Sicherheit ein Schaltsignal für eine Schalt- oder Anzeigefunktion des Empfangsgerätes erst dann auslöst, wenn erstmals eine Sendungskennung bei der Übertragung einer empfangenen Sendung auftritt oder wenn bei einer empfangenen Sendung ein Wechsel der übertragenen Sendungskennung von dem Empfangsgerät erkannt wird.

Die angegebenen Schaltungsanordnungen können ebenso wie die Datenauswertschaltung Bestandteile einer Mikroprozessorschaltung sein, was in diesem Falle zu überhaupt keinem zusätzlichen Schaltungsaufwand führt.

Die Erfindung wird nachfolgend anhand eines vorteilhaften Ausführungsbeispieles näher erläutert. In den zugehörigen Zeichnungen zeigen

Fig. 1    ein Blockschaltbild eines Videoempfangsgerätes mit einer Prüfschaltung für die Erkennungssicherheit der abgetrennten Kennungsdatenworte.

Fig. 2    Impuls- und Zustandsdiagramme a) bis i) zum Funktionsablauf der Prüfschaltung des in Fig. 1 dargestellten Empfangsgerätes.

Fig. 3    Diagramme a) bis i) zum Ablauf der Bildung eines des Schaltsignals des in Fig. 1 dargestellten Empfangsgerätes.

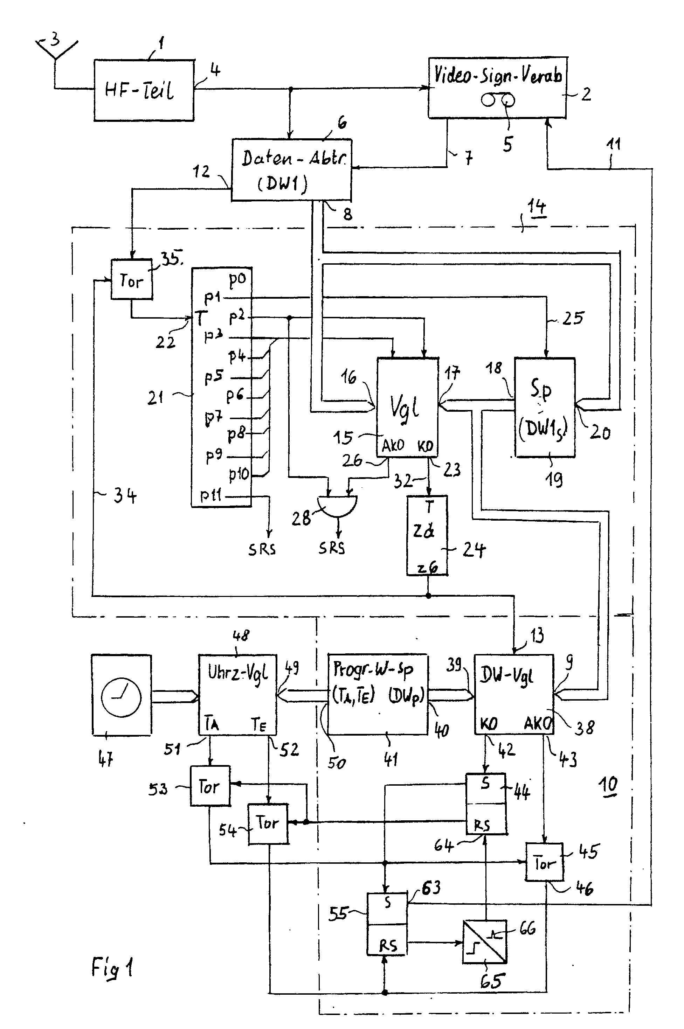

In Fig. 1 ist ein Videoempfangsgerät mit einer HF-Schaltung 1 und einer Videosignalverarbeitungsschaltung 2 dargestellt. Die HF-Schaltung enthält die Empfangs-, Abstimm- und Demodulationsschaltungen zur Demodulation der an einer Antenne 3 empfangenen Senderwelle, auf die die HF-Schaltung 1 abgestimmt ist. An einem Ausgang 4 liefert die HF-Schaltung ein Videosignal, das in der Videosignalverarbeitungsschaltung 2 in Steuersignale für eine Bildröhre oder in Steuer- und Speichersignale für das Videoband 5 eines Videorecorders umgewandelt werden. An den Ausgang 4 der HF-Schaltung 1 ist außerdem eine Datenabtrennschaltung 6 angeschlossen. Diese trennt aus bestimmten Videozeilen, die mittels im Empfangsgerät erzeugter und über eine Leitung 7 geleiteter Synchronimpulse ausgezählt werden, eine Sendungskennung aus dem Videosignalgemisch aus. Diese Sendungskennung wird während der Übertragung einer Sendung des empfangenen Senders mitübertragen und dient zur Kennzeichnung oder Identifikation der übertragenen und von dem Empfangsgerät empfangenen Sendung. Insbesondere das Sendungskennungsdatenwort dieser Sendungskennung dient zur Identifizierung der übertragenen Sendung und wird zur Auswertung vom Datenausgang 8 der Datenabtrennschaltung 6 an einen Dateneingang 9 einer Datenauswertschaltung 10 des Empfangsgerätes geleitet.

Die Datenauswertschaltung 10 prüft das an ihrem Eingang 9 liegende Sendungskennungsdatenwort $DW1_S$ mit in die Datenauswertschaltung eingegebenen und darin enthaltenen Datenworten und setzt das Ergebnis des Vergleiches in Schalt- und Anzeigebefehle um, die beispielsweise über Steuerleitungen 11 zur Videosignalverarbeitungsschaltung 2 gelangen und dort die zugehörigen Schalt- und Anzeigevorgänge auslösen. Sind diese Sendungskennungsdatenworte $DW1_S$ für die Datenauswertschatung jedoch nicht eindeutig erkennbar, was insbesondere bei schlechten Empfangsverhältnissen oder Empfangsstörungen öfters vorkommt, entstehen falsche oder überhaupt keine Auswertungen in der Datenauswertschaltung 10. Dies kann zum Ausfall von Sendungsteilen in dem Empfangsgerät führen, wie weiter unten noch näher erläutert wird.

Um derartige Ausfälle zu vermeiden, ist zwischen die Augänge 8 und 12 der Datenabtrennschaltung 6 und die Eingänge 9 und 13 der Datenauswertschaltung 10 eine Prüfschaltung 14 geschaltet, die nur bei einwandfreier Erkennung eines Sendungskennungsdatenwortes dieses Sendungskennungsdatenwort an die Datenauswertschaltung weiterleitet. Die Prüfschaltung enthält eine Vergleicherschaltung 15, deren einer Vergleichereingang 16 mit dem Datenausgang 8 der Datenabtrennschaltung 6 verbunden ist und deren anderer Vergleichereingang 17 mit dem Datenausgang 18 einer Speicherschaltung 19 verbunden ist. Deren Dateneingang 20 ist ebenfalls mit dem Datenausgang 8 der Datenabtrennschaltung 6 verbunden. Die beiden Schaltungen 15 und 19 werden von einem Programmzähler 21 gesteuert, dessen Steuereingang 22 mit dem Steuerausgang 12 der Datenabtrennschaltung 6 verbunden ist und von den Steuersignalen der Datenabtrennschaltung schrittweise fortgeschaltet wird.

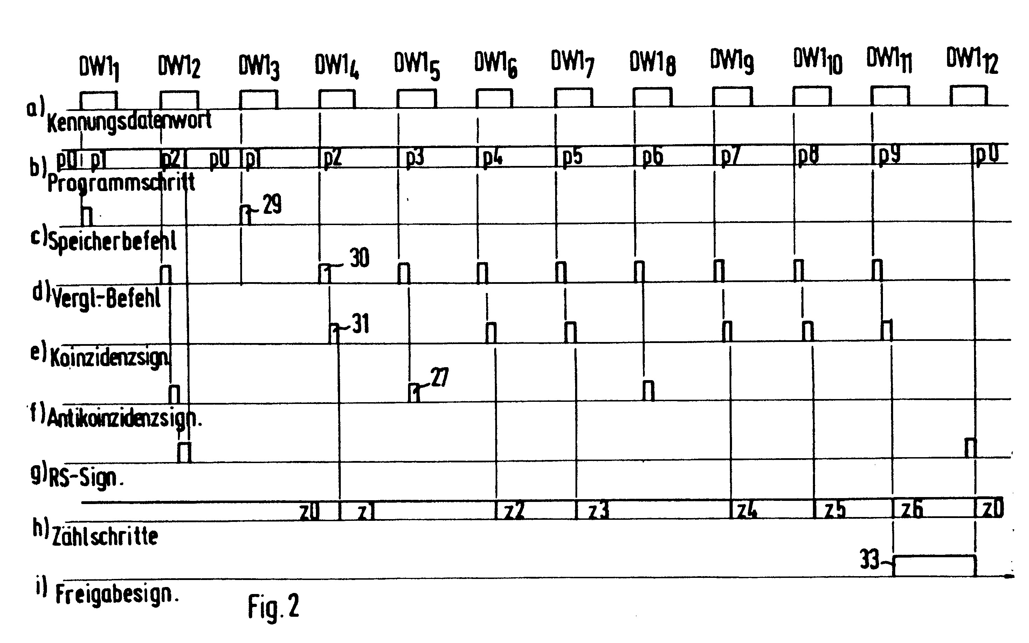

Der Verfahrensablauf zur Prüfung der sicheren Erkennbarkeit der am Datenausgang 8 der Datenabtrennschaltung 6 ausgegebenen Sendungskennungsdatenworte DW1 mittels der Schaltungen 15, 19 und 21 und einer an einen Koinzidenzausgang 23 der Vergleicherschaltung 15 angeschlossenen Zählerschaltung 24 wird anhand der Impuls- und Zustandsdiagramme a) bis i) der Fig. 2 näher erläutert. Im Diagramm a) der Fig. 2 sind schematisch die nacheinander von der Datenabtrennschaltung 6 ausgegebenen Sendungskennungsdatenworte DW1 zur Kennung der laufenden Sendung dargestellt, während im Diagramm b) die Programmschritte schematisch durch die benummerten Blöcke dargestellt sind, auf die der Programmwähler 21 im betrachteten Zeitpunkt eingestellt ist. Im Diagramm c) sind schematisch die Speicherbefehle als Signale 29, im Diagramm d) die Vergleicherbefehle als Signale 30, im Diagramm e) die Koinzidenzsignale 31 vom Koinzidenzausgang 23 der Vergleicherschaltung und im Diagramm g) die Rückstellsignale SRS schematisch dargestellt. Schließlich sind im Diagramm h) die Zählschrittstellungen der Zählschaltung 24 durch entsprechend bezifferte Blöcke dargestellt.

Zu Beginn der Prüfung ist die Prüfschaltung 14 durch ein Rückstellsignal SRS in einen Anfangszustand gesetzt, in dem der Programmzähler auf dem Programmschritt p0 steht (Diagramm a). Die laufende Sendung wird beispielsweise durch die laufende Übertragung das Sendungskennungsdatenwort DW1 gekennzeichnet. Das Steuersignal für das erste empfangene Sendungskennungsdatenwort $DW1_1$, das die Prüfschaltung 14 in ihrem Anfangszustand erreicht, schaltet den Programmzähler auf den Programmschritt p1, auf dem der Programmzähler einen Speicherbefehl 19 (Diagramm c) auf einer Leitung 25 zum Datenspeicher 19 erzeugt. Dadurch wird das anliegende Sendungskennungsdatenwort $DW1_1$ in den Datenspeicher 19 eingespeichert und über den Datenausgang 18 des Datenspeichers an den Dateneingang 17 der Vergleicherschaltung 15 angelegt. Das Steuersignal des nachfolgenden Sendungskennungsdatenwortes $DW1_2$ schaltet den Progrmmzähler auf den Programmschritt p2, auf dem er ebenso wie auf den folgenden Programmschritten einen Vergleichsbefehl 30 erzeugt, der im Diagramm d) der Fig. 2 dargestellt ist und der in der Vergleicherschaltung 15 den Vergleichsvorgang mit dem gespeicherten Sendungskennungsdatenwort $DW1_1$ und dem vom Datenausgang 8 der Datenabtrennschaltung gelieferten Sendungskennungsdatenwort $DW1_2$ auslöst. Im vorliegenden Beispiel wird von der Vergleicherschaltung keine Koinzidenz erkannt, statt dessen an einem Antikoinzidenzausgang 26 der Vergleicherschaltung ein in Diagramm f) der Fig. 2 dargestelltes Antikoinzidenzsignal erzeugt, das über eine ebenfalls vom Programmschritt p2 des Programmzählers 21 gesteuerte Torschaltung 28 als Rückstellsignal SRS die Prüfschaltung 14 in den Anfangszustand zurückstellt. Dadurch werden der Programmzähler 21 und die Zählschaltung 24 in den Anfangszustand zurückgestellt und der Datenspeicher 19 gelöscht.

Das nächstfolgende Sendungskennungsdatenwort $DW1_3$ wird in der gleichen Weise, wie oben beschrieben, in den Datenspeicher 19 eingespeichert und mit dem nachfolgenden Sendungskennungsdatenwort $DW1_4$ an der Vergleicherschaltung 15 verglichen. Da Koinzidenz zwischen den beiden verglichenen Sendungskennungsdatenworten vorliegt, erzeugt die Vergleicherschaltung an ihrem Koinzidenzausgang 23 ein Koinzidenzsignal 31, das die Zählschaltung 24 über eine Verbindung 32 auf den Zählschritt 1 setzt. Das Steuersignal des nächstfolgenden Sendungskennungsdatenwortes $DW1_5$ setzt den Programmzähler 21 auf den Programmschritt p3, auf dem er nur noch ein Vergleicherbefehl (Signal 30) erzeugt, jedoch nicht mehr die Torschaltung 28 für das Rückstellsignal durchlässig gesteuert. Das gleiche gilt für die folgenden Programmschritte p4 bis p10. Auf diesen Programmschritten kann somit die Prüfschaltung durch ein Antikoinzidenzsignal 27 am Ausgang 26 der Vergleicherschaltung nicht mehr in den Anfangszustand gesetzt werden. Andererseits wird bei jedem Sendungskennungsdatenwort $DW1_5$ und folgende, das mit dem in den Datenspeicher 19 gespeicherten Sendungskennungsdatenwort $DW1_4$ verglichen wird und beim Vergleich ein Koinzidenzsignal 31 erzeugt, die Zählschaltung 24 um einen Zählschritt weitergeschaltet, bis die Zählschaltung 24 ihren letzten Zählschritt Z6 erreicht und bei diesem Zählschritt ein Ausgangssignal 33 erzeugt, das im Diagramm i) als Freigabesignal 33 dargestellt ist. Mit diesem Freigabesignal wird das Sendungskennungsdatenwort $DW1_3$, das im Datenspeicher 19 als Vergleichsdatenwort $DW1_S$ gespeichert ist, für den Dateneingang 9 der Datenauswertschaltung 10 freigegeben. Außerdem wird durch das Freigabesignal 33 eine Fortschaltung des Programmzählers unterbunden, was in der Fig. 1 durch eine Verbindung 34 zu einer Torschaltung 35 angedeutet ist. Nach der Rückstellung der Prüfschaltung 14 in ihren Anfangszustand beginnt ein neuer Prüfablauf.

Die Anzahl der Programmschritte des Programmzählers 21, auf denen ein Vergleicherbefehl erzeugt wird, ist größer als die Anzahl der Zählschritte der Zählschaltung 24 und wird von einem Programmschritt P11 beendet, auf dem der Programmzähler ein Rückstellsignal SRS zur Rückstellung der Prüfschaltung 14 in den Anfangszustand erzeugt. Die Zahl der Programmschritte zwischen dem ersten und dem letzten Programmschritt ist so bemessen, daß auch bei schlechten Empfangsbedingungen und großen Störungen auf dem Empfangskanal in dem zweiten Prüfabschnitt, in dem die abgetrennten Sendungskennungsdatenworte mit dem als Vergleichsdatenwort $DW1_S$ als ausreichend erkennbares Sendungskennungsdatenwort $DW1_3$ verglichen werden, eine große Häufigkeit der Ausgabe des gespeicherten Kennungsdatenwortes mit hoher Sicherheit der Erkennbarkeit dieses Kennungsdatenwortes erreicht wird. Im ersten Prüfabschnitt, in dem das Tor 28 für die Antikoinzidenzsignale 29 zur Rückstellung der Prüfschaltung 14 geöffnet ist, wird somit ein einwandfrei erkennbares Kennungsdatenwort ermittelt, das im zweiten Prüfungsabschnitt zusätzlich auf seine Zuverlässigkeit geprüft wird. Als besonders vorteilhaft erwies sich, wenn die Anzahl der Programmschritte zwischen dem ersten und dem letzten Programmschritt des Programmzählers 21 etwa doppelt so groß ist wie die Anzahl der Zählschritte der Zählschaltung 24 bis zur Erzeugung des Freigabesignals 33. Die sichere Erkennung des in dem Datenspeicher 19 gespeicherten Kennungsdatenwortes $DW1_S$ kann dadurch noch wesentlich erhöht werden, daß für den ersten Prüfabschnitt des Prüfzyklus der Prüfschaltung 14 ein oder zwei weitere Programmschritte de Programmzählers 21 vorgesehen sind.

Dennoch ist nicht immer gewährleistet, daß das Ausbleiben eines Sendungskennungsdatenwortes $DW1_S$ am Ausgang der Prüfschaltung 14 tatsächlich das Ende einer Sendung S1 anzeigt, die es kennzeichnet, beispielsweise dann, wenn die Übertragung der Sendungskennung oder die Übertragung der Sendung länger als eine in der Prüfschaltung vorgegebene Zyklusprüfzeit unterbrochen ist. Deshalb gelangen in der Auswertschaltung 10 die von der Prüfschaltung 14 freigegebenen Sendungskennungsdatenworte $DW_S$ der abgetrennten Sendungskennungen an einen ersten Vergleichereingang 9 einer Vergleicherschaltung 38, an deren zweiten Vergleichereingang 39 der Datenausgang 40 eines Programmwunschspeichers 41 angeschlossen ist. Die Vergleicherschaltung 38 enthält in dem dargestellten Ausführungsbeispiel einen Koinzidenzausgang 42 und einen Antikoinzidenzausgang 43, an denen ein Koinzidenzsignal 59 oder ein Antikoinzidenzsignal 60 auftritt, wenn beim Vergleich der Daten an den Vergleichereingängen 9 und 39 der Vergleicherschaltung eine Koinzidenz oder eine Antikoinzidenz erkannt wird. Bei einem Koinzidenzsignal wird ein Zustandsspeicher in der Gestalt einer bistabilen Kippschaltung 44 aus dem Ruhezustand RS in den Setzzustand S gesetzt. Im Setzzustand S steuert die bistabile Kippschaltung 44 eine Torschaltung 45 für das Antikoinzidenzsignal in den Durchlaßzustand, so daß in diesem Fall ein Antikoinzidenzsignal am Antikoinzidenzausgang 43 der Vergleicherschaltung als Schaltsignal am Ausgang 46 der Torschaltung auftritt.

Außerdem enthält das in der Zeichnung dargestellte Videoempfangsgerät einen Uhrzeitgeber 47 mit daran angeschlossener Uhrzeitvergleicherschaltung 48, deren zweiter Vergleichereingang 49 an einen Zeitdatenausgang 50 des Programmwunschspeichers 41 angeschlossen ist. Zwei Koinzidenzausgänge 51 und 52 der Vergleicherschaltung 48 steuern über zwei Torschaltungen 53 und 54 bei einer Koinzidenz mit der Einschaltzeit $T_A$ bzw. einer Koinzidenz mit der Ausschaltzeit $T_E$ einen Betriebszustandsspeicher 55, der in der Setzstellung S ein über eine Leitung 11 zum Videoverarbeitungsteil 2 gelangendes Einschaltsignal 62 erzeugt und während der Dauer dieses Signales das Videoverarbeitungsteil 2 in den Betriebszustand schaltet.

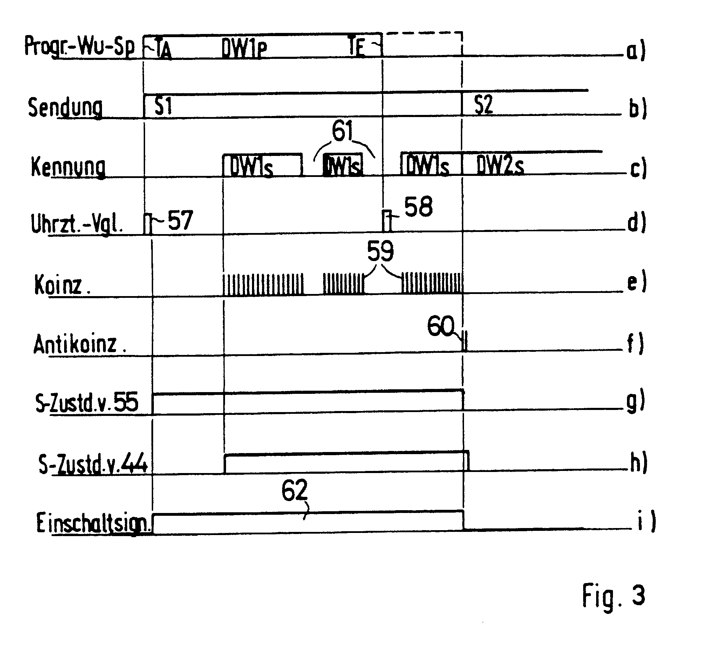

Die Wirkungsweise der Datenauswertschaltung wird anhand der in Fig. 3 dargestellten Diagramme a) bis i) nochmals erläutert. Das Diagramm a) zeigt einen im Programmwunschspeicher 41 gespeicherter Programmwunsch als Zeitbalken, der durch ein Kennungsdatenwort $DW1_P$ sowie durch die Anfangszeit $T_A$ und die Endzeit $T_E$ dargestellt ist. In einem besonders vorteilhaften Ausführungsbeispiel ist die Anfangszeit $T_A$ gleichzeitigdas Sendungskennungsdatenwort $DW1_P$ oder ein Teil davon. Im Diagramm b) sind als Zeitbalken die Sendungen des Senders dargestellt, auf den das Empfangsgerät abgestimmt ist, und im Diagramm c) ist die mit den Sendungen übertragene Sendungskennung zu den Sendungen dargestellt. Das Diagramm d) enthält das Koinzidenzsignal 57 für die geplante Anfangszeit $T_A$ des Programmwunsches und das Koinzidenzsignal 58 für die geplante Endzeit $T_E$ des im Diagramm a) dargestellten Programmwunsches. In den Diagrammen e) und f) sind die Koinzidenzsignale 59 dund die Antikoinzidoenzsignale 60 der Vergleicherschaltung 38 dargestellt und in den Diagrammen g) und h) als Zeitbalken der Setzzustand S der beiden Zustandsspeicher 44 und 55.

Im dargestellten Ausführungsbeispiel wird angenommen, daß die Sendung S1 des Senders, auf die das Empfangsgerät abgestimmt ist und die als Programmwunsch DW1$_P$ im Programmwunschspeicher 11 gespeichert ist, zunächst ohne das die Sendung kennzeichnende Sendungskennungsdatenwort DW1$_S$ übertragen wird. Dadurch schaltet ein Zeitkoinzidenzsignal 57 bei einer Zeitkoinzidenz des Uhrzeitgebers 47 mit der Anfangszeit T$_A$ aus dem Programmwunschspeicher 41 das Videoverarbeitungsteil über den Betriebszustandsspeicher 55 ein, der durch das Zeitkoinzidenzsignal 57 in den Setzzustand S gesetzt wird. Sobald das erste, die Sendung S1 kennzeichnende Sendungskennungsdatenwort DW1$_1$ vom Sender übertragen, von der Datenabtrennschaltung 6 abgetrennt und von der Prüfschaltung 14 sicher erkannt zum Vergleich ausgegeben wird, führt die Vergleicherschaltung 38 einen Vergleich mit dem Kennungsdatenwort DW1$_P$ des Programmwunsches durch und schaltet bei erkannter Koinzidenz mittels eines Koinzidenzsignales 59 am Koinzidenzausgang 42 der Vergleicherschaltung den bistabilen Zustandsspeicher 44 in den Setzzustand. Dieser sperrt im Setzzustand die im Ruhezustand RS durchlässig gesteuerten Torschaltungen 53 und 54 am Ausgang der Uhrzeitvergleicherschaltung 48 und macht damit deren Ausgang wirkungslos. Selbst bei Unterbrechungen der Sendungskennung, die im Diagramm c) durch Lücken 61 angedeutet sind und die beispielsweise durch Störungen aufgetreten sind, wird ein Ausgangssignal der Uhrzeitvergleicherschaltung, beispielsweise das Zeitkoinzidenzsignal 58 für die Endezeit T$_E$ des gespeicherten Programmwunsches nicht wirksam. Erst wenn der Sender ein Sendungskennungsdatenwort DW2$_S$ zur Kennung einer Sendung S2 überträgt, das nicht mit dem Kennungsdatenwort DW1$_P$ des Wunschprogrammes übereinstimmt, das am Vergleichseingang 39 der Vergleicherschaltung 38 anliegt und die Vergleicherschaltung 38 beim Vergleichsvorgang eine Antikoinzidenz erkennt und ein Antikoinzidenzsignal 60 an ihrem Antikoinzidenzausgang 43 ausgibt, das über die Torschaltung 45 an den Rückstelleingang RS des Betriebszustandsspeichers 55 gelangt, wird dieser in den Ruhezustand zurückgestellt. Dadurch wird das Tonschaltsignal 62 am Ausgang 63 des Betriebszustandsspeichers 55 abgebrochen, das Videoverarbeitungsteil 2 damit ausgeschaltet und der zum Vergleich anliegende Programmwunsch im Programmwunschpeicher 41 gelöscht. In der Ruhestellung RS des Betriebszustandsspeichers 55 erhält der Rückstelleingang des bistabilen Zustandsspeichers 44 über einen Impulsformer 65 einen Rückstellimpuls 66, der den bistabilen Zustandsspeicher 44 in die Ruhestellung RS zurückstellt und in dieser Einstellung den Antikoinzidenzausgang 43 der Vergleicherschaltung 38 über die Torschaltung 45 sperrt. Das erste Antikoinzidenzsignal 59 der Vergleicherschaltung 38 bildet somit ein Schaltsignal zum Ausschalten des Videoverarbeitungsteiles 2. Dieses Schaltsignal wird dadurch gebildet, daß in einem ersten Vergleichsschritt ein Koinzidenzsignal gebildet und dieses Vergleichsergebnis gespeichert wird und daß in einem späteren Vergleich eine Antikoinzidenz festgestellt wird, deren Antikoinzidenzsignal nur dann ein Schaltsignal bildet, wenn zuvor eine Koinzidenz erkannt und gespeichert wurde.

**Patentansprüche**

1. Verfahren zur Bildung eines Schaltsignales aus einem mit einem Rundfunk- oder Videoempfangsgerät empfangenen Sendungskennungsdatenwort (DW1s1...) einer Sendungskennung,
   - die von dem Sender (S1), auf den das Empfangsgerät abgestimmt ist, gleichzeitig während der Übertragung einer Sendung zur Kennzeichnung dieser Sendung übertragen wird
   - und die in dem auf den Sender abgestimmten Empfangsgerät
     - von den Signalen der Sendung abgetrennt wird,
     - in einem Prüfzyklus durch einen Mehrfachvergleich auf sicheres Erkennen geprüft wird
     - und zur Bildung eines Schaltsignals zum Auslösen von Schalt- und Anzeigefunktionen in dem Empfangsgerät ausgewertet wird, wenn in einem Vergleich des Sendungskennungsdatenwortes (DW1s) mit in einem Programmwunschspeicher (41) gespeicherten Kennungsdatenworten (DW1p...), die je einer im Programmwunschspeicher eingespeicherten ausgewählten Sendung zu deren Kennzeichnung zugeordnet sind, eine Koinzidenz (27) auftritt
   **dadurch gekennzeichnet,**
   - daß in dem Prüfzyklus ein erstes abgetrenntes Sendungskennungsdatenwort (DW1s3) gespeichert wird,
   - daß nachfolgende abgetrennte Sendungskennungsdatenworte (DW1s4...) mit dem gespeicherten ersten Sendungskennungsdatenwort (DW1s3) verglichen werden
   - und daß das gespeicherte erste Sendungskennungsdatenwort (DW1s3) oder ein nachfolgendes, mit dem ersten Sendungskennungsdatenwort identisches und in dem Prüfzyklus zum Vergleich herangezogenes Sendungskennungsdatenwort dann zum Auswerten und Auslösen vom Sendungskennungsdatenwort abhängiger Schalt- und Anzeigefunktionen freigegeben wird, wenn in dem Prüfzyklus bei jedem Vergleich oder einem überwiegenden Anteil der Zahl der zum Vergleich angelegten Sendungskennungsdatenworte (DW1s4...DW1s11) eine Koinzidenz (31) zwischen dem gespeicherten Sendungskennungsdatenwort und den nacheinander zum Vergleich anliegenden Sendungskennungsdatenworten erkannt wurde.

2. Verfahren nach Anspruch 1, dadurch gekennzeichnet,
- daß in einem ersten Teil des Prüfzyklus das gespeicherte erste Sendungskennungsdatenwort (DW1$_3$) dann für einen zweiten Teil des Prüfzyklus als Vergleichsdatenwort bereitgestellt wird, wenn im ersten Teil des Prüfzyklus bei jedem Vergleich einer vorbestimmten Anzahl von Vergleichen der auf das erste abgetrennte und gespeicherte Sendungskennungsdatenwort folgenden abgetrennten Sendungskennungsdatenworte (DW1$_4$) eine Koinzidenz (31) mit dem gespeicherten ersten Sendungskennungsdatenwort erkannt wird,
- und daß in dem anschließenden zweiten Teil des Prüfzyklus das gespeicherte erste Sendungskennungsdatenwort (DW1$_3$) oder ein nachfolgendes, im Prüfzyklus zum Vergleich benutztes Sendungskennungsdatenwort dann zur Auswertung freigegeben wird, wenn beim Vergleich einer bestimmten Anzahl aufeinanderfolgender abgetrennter Sendungskennungsdatenwörter (DW1$_5$...) mit dem Vergleichsdatenwort (DW1$_3$) wenigstens eine vorgegebene Anzahl Koinzidenzen (z6) erkannt wird.

3. Verfahren nach Anspruch 1 oder 2,
dadurch gekennzeichnet,
- daß bei einem Vergleich des abgetrennten, eine übertragene Sendung (S2) kennzeichnenden Sendungskennungsdatenwortes (DW2$_S$) mit einem der im Programmwunschspeicher (11) gespeicherten, eine gewünschte Sendung (S1) kennzeichnenden Kennungsdatenworten (DW1p) dann ein Antikoinzidenzsignal (30) erzeugt wird, wenn keine Koinzidenz zwischen den beiden verglichenen Kennungsdatenworten erkannt wird,
- und daß das Antikoinzidenzsignal dann ein Schaltsignal zum Auslösen einer Schalt- oder Anzeigefunktion bildet, wenn bei dem unmittelbar vorhergehenden Vergleich eines abgetrennten, eine andere übertragene Sendung (S1) kennzeichnenden Sendungskennungsdatenwortes (DW1$_S$) mit dem noch zum Vergleich anstehenden, im Programmwunschspeicher gespeicherten Kennungsdatenwort (DW1p) eine Koinzidenz erkannt wurde.

4. Empfangsgerät zur Durchführung des Verfahrens nach einem der Ansprüche 1 oder 2 mit einer Datenabtrennschaltung, die das übertragene Sendungskennungsdatenwort aus den übertragenen Informationen abtrennt und an einem Datenausgang an eine Datenauswertschaltung zur Erzeugung eines von der Auswertung abhängigen Schaltsignales (62) ausgibt,
dadurch gekennzeichnet,
- daß zwischen den Datenausgang (8) der Datenabtrennschaltung (6) und die Datenauswertschaltung (10) eine Prüfschaltung (14) geschaltet ist, die
  - einen an den Datenausgang der Abtrennschaltung angeschlossenen Datenspeicher (19) zur Speicherung eines Sendungskennungsdatenwortes (DW1s3),
  - eine mit dem einen Vergleichereingang (16) an den Datenausgang der Abtrennschaltung und mit dem anderen Vergleichereingang (17) an den Datenausgang (18) des Datenspeichers (19) angeschlossene Vergleicherschaltung (15),
  - einen den Datenspeicher und die Vergleicherschaltung steuernden Programmzähler (21)
  - und eine an den Koinzidenzausgang (23) der Vergleicherschaltung (15) angeschlossene, die Koinzidenzsignale (Ko) zählende Zählschaltung (24) enthält,
- daß der Programmzähler (21) derart beschaffen und mit der Datenabtrennschaltung verbunden ist, daß er von einem Signal jedes am Datenausgang der Abtrennschaltung ankommenden Senderkennungsdatenwortes auf den nächsten Programmschritt (p1...) setzbar ist,
- daß das Ausgangssignal des ersten Programmschrittes (p1) des Programmzählers ein Einspeicherbefehl (29) für den Senderkennungsdatenspeicher (19) ist,
- daß das Ausgangssignal der Programmschritte einer ersten Gruppe einer bestimmten Anzahl auf den ersten Programmschritt (p1) folgenden Programmschritte (p2) einerseits ein Vergleicherbefehl (30) für die Vergleicherschaltung (15) ist und andererseits zusätzlich dann, wenn die Vergleicherschaltung bei einem Vergleich eine Antikoinzidenz feststellt und ein Antikoinzidenzsignal (AKo) erzeugt, ein Rücksetzsignal (RS) zum Rücksetzen der Prüfschaltung in den Anfangszustand ist,

- daß das Ausgangssignal der Programmschritte einer zweiten, an die erste Gruppe anschließenden Gruppe von Programmschritten (p3...p10), deren Zahl größer ist als die Summe der vorgegebenen Anzahl (z6) der Zählschritte der die Koinzidenzen zählenden Zählschaltung plus der Anzahl der Programmschritte der ersten Gruppe, ausschließlich ein Vergleichersignal für die Vergleicherschaltung (15) ist,

- daß das Ausgangssignal eines an die zweite Gruppe von Programmschritten anschließenden Programmschrittes (p11) des Programmzählers ein Rücksetzsignal (SRS) zum Rücksetzen der Prüfschaltung in den Anfangszustand ist

- und daß das Ausgangssignal des letzten vorgegebenen Zählschrittes (z6) der die Koinzidenzen zählenden Zählschaltung das Freigabesignal (33) zur Auswertung des am Dateneingang (9) der Datenauswertschaltung (10) anliegenden Sendungskennungsdatenwortes (DW1s3) ist.

5. Empfangsgerät nach Anspruch 4 zur Durchführung des Verfahrens nach Anspruch 3 mit einer Datenabtrennschaltung, einer dieser nachgeschalteten Datenauswertschaltung und einem an eine Vergleicherschaltung der Datenauswertschaltung angeschlossenen Programmwunschspeicher,
**dadurch gekennzeichnet,**
- daß die Vergleicherschaltung (38) der Datenauswertschaltung (10) bei Erkennung einer Koinzidenz eines an ihrem ersten Vergleichereingang (9) liegenden, vom Ausgang (18) der Prüfschaltung (14) kommenden Sendungskennungsdatenwort (DW1s) zur Kennzeichnung einer übertragenen Sendung (S1) mit einem an ihrem zweiten Vergleichereingang (39) liegenden, vom Programmwunschspeicher (41) kommenden und dort gespeicherten Kennungsdatenwort (DW1p) an ihrem Ausgang (42) ein Koinzidenzsignal (59) erzeugt und bei einer erkannten Antikoinzidenz zwischen einem von der Prüfschaltung (14) kommenden Sendungskennungsdatenwort (DW2s) zur Kennzeichnung einer übertragenen Sendung (S2) und dem an den zweiten Vergleichereingang gelegten Kennungsdatenwort (DW1p) an ihrem Ausgang ein von dem Koinzidenzsignal abweichendes Antikoinzidenzsignal (30) erzeugt,

- daß das Koinzidenzsignal eine in der Rücksetzstellung (RS) befindliche bistabile Kippschaltung (44) in die Setzstellung (S) stellt,

- und daß die bistabile Kippschaltung in der Setzstellung (S) eine Torschaltung (45) durchlässig steuert, die im Durchlaßzustand das an ihrem Eingang anliegende Antikoinzidenzsignal als Schaltsignal an ihren Ausgang (46) überträgt.

## Claims

1. A method of forming a switching signal from a transmission identification data word (DW1s1...) of a transmission identification received with a radio or video reception means, where the said transmission identification is

- transmitted by the transmitter to which the reception means is tuned at the same time as the transmission in order to identify the said transmission

- and, on being received in the reception means tuned to the transmitter, is

- separated from the signals of the transmission,

- tested for sure recognition in a testing cycle employing multiple comparisons

- and, always provided that coincidence (27) is ascertained in a comparison of the transmission identification data word (DW1s) with identification data words (DW1p...) stored in a programme request store (41), where each of the said identification data words is associated with and identifies a selected transmission read into the programme request store, is evaluated and used to form a switching signal to trigger switching and display functions in the reception means,

**characterized in that**

- a first separated transmission identification data word (DW1s3) is stored in the course of the testing cycle,

- subsequent separated transmission identification data words (DW1s4...) are compared with the stored first transmission identification data word (DW1s3), and

- the stored first transmission identification data word (DW1s3) or a subsequent transmission identification data word identical with the first transmission identification data word and used for comparison purposes in the testing cycle is released for evaluation and the triggering of switching and display functions that depend on the transmission identification data word whenever in the course of the testing cycle either each comparison or a predominant part of the number of transmission identification data words (DW1s4...DWs11) employed for comparison have ascertained a coincidence (31) between the stored transmission data word and the transmission identification data words successively used for comparison.

2. A method in accordance with Claim 1, **characterized in that**
- in a first part of the testing cycle the stored first transmission identification data word $(DW1_3)$ is made available as the comparison word for the second part of the testing cycle when in the first part of the testing cycle each of the comparisons of a prespecified number of comparisons ascertains a coincidence (31) between the separated transmission identification data words $(DW1_4)$ following the first separated and stored transmission identification data word and the said stored first transmission identification data word, and that
- in the subsequent second part of the testing cycle the stored first transmission identification data word $(DW1_3)$ or a subsequent transmission identification data word used for comparison purposes in the testing cycle will be released for evaluation whenever the comparison of a certain number of successive separated transmission identification data words $(DW1_5...)$ with the comparison data word $(DW1_3)$ ascertains at least a prespecified number of coincidences (z6).

3. A method in accordance with either Claim 1 or Claim 2, **characterized in that**
- an anticoincidence signal (30) is produced when a comparison between the separated transmission identification data word $(DW2_S)$ identifying a broadcast transmission (S2) and one of the identification data words (DW1p) stored in the programme request store (11) and identifying a desired transmission (S1) does not reveal a coincidence between the compared identification data words, and that
- the anticoincidence signal will form a switching signal for triggering a switching and display function whenever a coincidence was ascertained in the immediately preceding comparison between a separated transmission identification data word $(DW1_S)$ identifying some other broadcast transmission (S1) and the identification data word (DW1p) stored in the programme request store and still available for comparison.

4. A reception means for carrying out the method in accordance with either Claim 1 or Claim 2 with a data separation circuit that separates the broadcast transmission identification data word from the broadcast information and makes it available at a data output for transfer to a data evaluation circuit and the production of a switching signal (62) depending on the evaluation, **characterized in that**
- between the data output (8) of the data separation circuit (6) and the data evaluation circuit (10) there is connected a testing circuit (14) that contains
    - a data store (19) for storing a transmission identification data word (DW1s3), the said data store being connected to the data output of the separation circuit,
    - a comparator circuit (15) connected by means of one comparator input (16) to the data output of the separator circuit and with the other comparator input (17) to the data output (18) of the data store (19),
    - a programme counter (21) controlling the data store and the comparator circuit, and
    - a counter circuit (24) for counting the coincidence signals (Ko), the said counter circuit being connected to the coincidence output (23) of the comparator circuit (15),
    and
- that the programme counter (21) is designed and connected to the data separation circuit in such a manner as to make it possible for every transmission identification data word arriving at the data output of the separation circuit to set it for the next programme step (p1...),
- that the output signal of the first programme step (p1) of the programme counter is a read-in command (29) for the transmission identification data store (19),

- that the output signal of the programme steps of a first group of a certain number of programme steps (p2) following the first programme step (p1) is not only a comparator command (30) for the comparator circuit (15), but also a resetting signal (RS) for resetting the testing circuit into its initial state whenever the comparator circuit ascertains an anticoincidence in the course of a comparison and produces an anticoincidence signal comparison and produces an anticoincidence signal (AKo),
- that the output signal of the programme steps of a second group of programme steps (p3...p10) following the first group, where the number of steps in the said second group is greater than the sum of the prespecified number (z6) of the counting steps of the counter circuit counting the coincidences plus the number of the programme steps of the first group, is exclusively a comparator signal for the comparator circuit (15),
- that the output signal of a programme step (p11) following the second group of programme steps is a resetting signal (SRS) for resetting the testing circuit into its initial state, and
- that the output signal of the last prespecified counting step (z6) of the counter circuit counting the coincidences is the release signal (33) for the evaluation of the transmission identification data word (DW1s3) applied to the data input (9) of the data evaluation circuit (10).

5. A reception means in accordance with Claim 4 for carrying out the method in accordance with Claim 3 with a data separation circuit, a data evaluation circuit downstream of the said data separation circuit and a programme request store that is connected to a comparator circuit of the data evaluation circuit, **characterized in that**

- the comparator circuit (38) of the data evaluation circuit (10), whenever it ascertains a coincidence between a transmission identification data word ($DW1_S$) characterizing a broadcast transmission (S1) applied to the first comparator input (9) after arriving from the output (18) of the testing circuit (14) and an identification data word (DW1p) applied to the second comparator input (39) after arriving from the programme request store (41) in which it is stored, generates at its output (42) a coincidence signal (59) and, whenever it ascertains an anticoincidence between a transmission identification data word ($DW2_S$) characterizing a broadcast transmission (S2) in arrival from the testing circuit (14) and the identification word (DW1p) applied to the second comparator input, generates at its output an anticoincidence signal (30) that is different from the coincidence signal,

- that the coincidence signal sets a bistable toggle switch (44) from the reset position (RS) into the set position (S), and
- that the bistable toggle switch, whenever it is in the set position (S), controls a gate switch (45) into its conducting position, where the conducting position of the said gate switch is such that the switch will transfer the anticoincidence signal applied to its input to become the switching signal at its output (46).

## Revendications

1. Procédé pour la formation d'un signal de commutation à partir d'un code d'indentification reçu d'un récepteur radio ou vidéo (DW1s1...) d'une identification d'émission,

  - transmis par l'émetteur (S1), sur lequel l'appareil récepteur est accordé, simultanément pendant la transmission d'une émission pour caractériser cette émission
  - et qui est, dans l'appareil récepteur accordé à l'émetteur
    - séparée des signaux de l'émission,
    - contrôlée au plan d'une identification sûre moyennant une comparaison multiple dans un cycle de contrôle
    - et évaluée pour la formation d'un signal de commutation servant au déclenchement de fonctions de commutation et d'affichage dans l'appareil récepteur, si une coïncidence (27) se produit pendant la comparaison du code d'identification de l'émission (DW1s) avec des codes d'identification (DW1p..) mémorisés dans une mémoire de programmes souhaités (41), accordés chacun pour leur identification à une émission sélectionnée mémorisée dans la mémoire **caractérisé** en ce que

  - un premier code d'identification d'émission séparé (DW1s3) est mémorisé dans le cycle de contrôle,

- des codes d'identification d'émission (DW1s4...) séparés successifs sont comparés avec le premier code d'identification d'émission mémorisé (DW1s3)

- et que le premier code d'identification d'émission mémorisé (DW1s3) ou un code consécutif, identique au premier code d'identification et un code d'identification utilisé pour la comparaison dans le cycle de contrôle est ensuite débloqué pour l'évaluation et le déclenchement de fonctions de commutation et d'affichage assujettis au code d'identification d'émission, si dans le cycle de contrôle lors de chaque comparaison ou d'une part prépondérante du nombre des codes d'identification utilisés pour la comparaison (DW1s4...DW1s11) une coincidence (31) a été reconnue entre le code d'identification mémorisé et les codes d'identification appliqués successivement pour la comparaison.

2. Procédé selon la revendication 1, caractérisé en ce que

- dans une première période du cycle de contrôle, le premier code d'identification d'émission mémorisé (D41₃) est dans une deuxième période du cycle de contrôle mis à disposition comme code de comparaison, si dans la première période du cycle de contrôle on reconnaît, à chaque comparaison d'un nombre présélectionné de comparaisons, une coincidence (31) entre le code d'identification séparé (DW1₄) succédant au premier code d'identification d'émission séparé et mémorisé et le premier code d'identification mémorisé

- et que, dans la deuxième période consécutive du cycle de contrôle, le premier code d'identification d'émission mémorisé (DW1₃) ou un code d'identification successif utilisé pour la comparaison dans le cycle de contrôle est débloqué pour l'évaluation si, pendant la comparaison d'un certain nombre de codes d'identification d'émission successifs (DW1₅) avec le code de comparaison (DW1₃), au moins un nombre prédéfini de coincidences (Z6) est reconnu.

3. Procédé selon la revendication 1 ou 2,

**caractérisé en ce que**

- en comparant le code d'identification d'émission (DW2₅) caractérisant une

émission transmise (S2) avec un code d'identification (DW1p), mémorisé dans la mémoire de programmes souhaités (11) caractérisant une émission souhaitée (S1), un signal d'anticoincidence (30) est généré, si aucune coincidence entre les deux codes d'identification comparés n'est reconnue.

- et que le signal d'anticoincidence forme un signal de commutation pour le déclenchement d'une fonction de commutation ou d'affichage, si, lors de la comparaison précédente d'un code d'identification d'émission (DW1₅) séparé, caractérisant une autre émission transmise (S1), une coincidence est reconnue avec le code d'identification (DW1p) mémorisé dans la mémoire de programmes souhaités et encore en instance pour la comparaison.

4. Appareil récepteur pour la mise en oeuvre du procédé selon l'une des revendications 1 ou 2 avec un circuit de détachement de données, séparant le code d'identification d'émission transmis des informations transmises et le transférant à travers une sortie de données sur un circuit d'exploitation de données pour la génération d'un signal de commutation (62) en fonction de l'évaluation,

**caractérisé en ce que**

- un circuit de contrôle (14) est monté entre la sortie de données (8) et le circuit d'exploitation de données (10), qui comprend

- une mémoire de données (19) branchée sur la sortie de données du circuit de séparation pour la mémorisation d'un code d'identification d'émission (DW1s3),

- un circuit comparateur (15) branché à travers une entrée de comparateur (16) sur la sortie de données du circuit de séparation et avec l'autre entrée de comparateur (17) sur la sortie de données (18) de la mémoire de données (19),

- un compteur d'instructions (21) pilotant la mémoire de données et le circuit comparateur - et un circuit de comptage (24) branché sur la sortie de coincidence (23) du circuit comparateur (15), comptant les signaux de coincidence (Ko),

- le compteur d'instructions (21) est conçu de telle sorte et relié avec le circuit de séparation de données de manière qu'il peut être placé, à partir d'un signal de chaque code d'identification d'émission parvenant sur la sortie de données du circuit de séparation, sur le pas de programme suivant (p1...),

- le signal de sortie du premier pas de programme (p1) du compteur d'instructions est une instruction de mise en mémoire (29) pour la mémoire de codes d'identification d'émission (19),
- le signal de sortie des pas de programme d'un premier groupe d'un certain nombre de pas de programme (p2) succédant au premier pas (p1) est d'une part une instruction de comparaison (30) pour le circuit comparateur (15) et d'autre part, surtout si le circuit comparateur constate une anticoincidence lors d'une comparaison et produit un signal d'anticoincidence (AKo), un signal de remise à l'état initial (RS) pour la remise du circuit de contrôle à l'état initial,
- le signal de sortie des pas de programme d'un deuxième groupe (p3...p10) succédant au premier groupe, dont le nombre est plus grand que la somme du nombre prédéfini (Z6) des pas de comptage représentant le circuit de comptage comptant les coincidences plus le nombre des pas de programme du premier groupe, est uniquement un signal de comparaison pour le circuit comparateur (15),
- le signal de sortie d'un pas de programme succédant au deuxième groupe de pas de programme (p11) du compteur d'instructions est un signal de remise à l'état initial (SRS) pour la remise du circuit de contrôle à l'état initial,
- et le signal de sortie du dernier pas de comptage (Z6) présélectionné est le signal de déblocage (33) pour l'exploitation du code d'identification d'émission appliqué sur l'entrée de données (DW1s3).

5. Appareil récepteur selon la revendication 4 pour la mise en oeuvre du procédé selon revendication 3 avec un circuit de séparation de données, un circuit d'exploitation de données monté en aval et une mémoire de programmes souhaités branchée sur un circuit comparateur du circuit d'exploitation de données,
**caratérisé en ce que**
- le circuit comparateur (38) du circuit d'exploitation de données (10) produit sur sa sortie (42) un signal de coincidence (59) en détectant une coincidence d'un code d'identification d'émission (DW1$_s$) appliqué sur la première entrée (9) du comparateur et venant de la sortie (18) du circuit de contrôle (14) pour la caractérisation d'une émission transmise (S1) avec un code d'identification (DW41p) appliqué sur la deuxième entrée du comparateur (39) et venant de la mémoire de programmes souhaités (41) et y étant mémorisé et produit, en détectant une anticoincidence entre un code d'identification d'émission (DW1$_s$) venant du circuit de contrôle (14) et le code d'identification (DW1p) appliqué sur la deuxième entrée du comparateur, sur sa sortie un signal d'anticoincidence (30) déviant du signal de coincidence,
- le signal de coincidence commute un flip-flop (44) bistable se trouvant en position de remise à l'état initial (RS) en position de mise en service (S),
- le flip-flop bistable pilote en position de service (S) un circuit-porte (45) en état passant qui dans cet état transmet le signal d'anticoincidence appliqué sur son entrée comme signal de commutation sur sa sortie (46).

Fig 1

EP 0 256 152 B1

13

Fig. 2

| Progr.-Wu-Sp | TA | DW1P | TE | | | a) |
| Sendung | S1 | | | S2 | | b) |
| Kennung | | DW1s | 61 DW1s | DW1s | DW2s | c) |
| Uhrzt.-Vgl. | 57 | | 58 | | | d) |
| Koinz. | | | 59 | | | e) |
| Antikoinz. | | | 60 | | | f) |
| S-Zustd.v.55 | | | | | | g) |
| S-Zustd.v.44 | | | | | | h) |
| Einschaltsign. | 62 | | | | | i) |

Fig. 3